(19) Europäisches Patentamt
European Patent Office
Office européen des brevets

(11) **EP 2 660 058 A2**

(12) **EUROPÄISCHE PATENTANMELDUNG**

(43) Veröffentlichungstag:
06.11.2013   Patentblatt 2013/45

(51) Int Cl.:
**B41F 33/00** *(2006.01)*     **B41F 33/02** *(2006.01)*

(21) Anmeldenummer: 13166196.9

(22) Anmeldetag: 02.05.2013

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **02.05.2012   DE 102012207268**

(71) Anmelder: **BST International GmbH
33739 Bielefeld (DE)**

(72) Erfinder:
• **Dattner, Michael
33739 Bielefeld (DE)**
• **Bettführ, Jürgen
33739 Bielefeld (DE)**
• **Wiebe, Michael
33818 Leopoldshöhe (DE)**

(74) Vertreter: **Klingseisen, Franz
Klingseisen & Partner
Postfach 10 15 61
80089 München (DE)**

(54)   **Verfahren und Vorrichtung für die Farbmessung an einer laufenden Materialbahn**

(57)   Vorrichtung zur Farbmessung eines Farbfeldes bzw eines Messbereichs eines auf einer laufenden Materialbahn aufgedruckten Druckbildes, umfässend eine Messeinheit, die auf einer Führungsbahn quer über der laufenden Materialbahn verfahrbar ist, wobei eine Einrichtung vorgesehen ist, mittels der die Messeinheit aus dem Messbereich über der Materialbahn in eine Außenposition bewegbar ist, in der die Messeinheit auf einen Messbereich außerhalb der Materialbahn gerichtet ist.

Fig. 1

EP 2 660 058 A2

**Beschreibung**

Die Erfindung betrifft ein Verfahren zur Farbmessung an einer laufenden Materialbahn sowie eine Messvorrichtung mit einer Messeinheit, die auf einer Führungsbahn quer über der laufenden Materialbahn bewegbar ist, auf der farbige Druckbilder durch eine Druckmaschine aufgedruckt sind.

Erfindungsgemäß wird die über dem Druckbild auf der Materialbahn verfahrbare Messeinheit in eine Außenposition bewegt bzw verfahren, in der die Messeinheit auf einen Bereich außerhalb der Materialbahn gerichtet ist. Hierdurch ist es möglich, die Messeinheit, die einen integralen Bestandteil eines Farbmesssystems zur Überprüfung der Farbwerte eines auf der Materialbahn aufgedruckten Druckbildes darstellt, unabhängig von diesem Farbmesssystem für andere Zwecke einzusetzen, beispielsweise für den Vergleich der Messwerte mit denen eines Handmessgerätes, das bei der Farbmessung im Druckbetrieb als Standardmessgerät verwendet wird

Nach einem weiteren Aspekt der Erfindung wird durch Messungen in der Außenposition der Messeinheit der im Betrieb verschmutzte Messhintergrund einer Farbmessung kompensiert

Nach der Erfindung wird eine Vorrichtung zur Farbmessung eines Farbfeldes bzw. eines Messbereichs eines auf einer laufenden Materialbahn aufgedruckten Druckbildes vorgesehen, umfassend

eine Messeinheit, die auf einer Führungsbahn quer über der laufenden Materialbahn verfahrbar, ist,

wobei eine Einrichtung vorgesehen ist, mittels der die Messeinheit aus dem Messbereich über der Materialbahn in eine Außenposition bewegbar ist, in der die Messeinheit auf' einen Messbereich außerhalb der Materialbahn gerichtet ist.

Eine solche Einrichtung, mittels der die Messeinheit auf einen Messbereich außerhalb der Materialbahn gerichtet werden kann, kann als seitliche Verlängerung der Führungsbahn ausgebildet werden, wobei die Messeinheit in der Position auf der seitlichen Verlängerung der Führungsbahn nicht mehr auf die Materialbahn gerichtet ist.

Weiterhin kann die Einrichtung zum Bewegen der Messeinheit in die Außenposition durch eine Kippvorrichtung ausgebildet sein, durch die die Messeinheit auf der verlängerten oder auch nicht verlängerten Führungsbahn in eine Außenposition verschwenkt wird, in der die z.B. um 90° vesrchwenkte Messeinheit auf eine Fläche senkrecht zur Ebene der Materialbahn gerichtet ist.

Zweckmäßigerweise wird die Messeinheit insbesondere in der Außenposition von einer Führung und/ oder einem Gehäuse umgeben, das eine Halterung für einen Probenaufmahmekörper aufweist, der relativ zur Messeinheit positioniert werden kann.

Der Probenaumahmekörper wird vorteilhafterweise mit einem Eingriffsabschnitt versehen, der formschlüssig mit einem entsprechenden Aufnahmeabschnitt an der Halterung bzw. im Gehäuse oder auch mit einem Aufnahmeabschnitt an einem Handmessgerät in Eingriff bringbar ist, so dass der Probenaufnahmekörper in der gleichen Position relativ zur Kamera bzw. zur Messeinheit angeordnet werden kann, die der Mess- bzw. Aufnahmeposition der Kamera bzw Messeinheit relativ zur Materialbahn entspricht

Bei einer Messeinheit, die in eine Außenposition bewegt wird, in der die Messeinheit auf einen anderen Messbereich als einen Messbereich auf der Materialbahn ausgerichtet ist, kann in der Außenposition der Messeinheit eine Farbmessung an einer Farbprobe ausgeführt werden und das Ergebnis der Farbmessung kann bspw. als Vergleichswert bei der Überwachung der Qualität eines Farbdrucks verwendet werden.

Das Ergebnis der Farbmessung an einer Farbprobe in der Außenposition der Messeinheit wird zweckmäßigerweise mit dem Ergebnis der Farbmessung der gleichen Probe durch ein Handgerät verglichen, das Referenzwerte für die Farbmessung bzw. die Überwachung der Farbqualität wiedergibt

Der Probenkörper wird vorteilhafterweise durch eine Passeinrichtung an der Messeinheit in der Außenposition und/oder an dem Handgerät in einer vorgegebenen Ausrichtung bzw. im vorgegebenen Abstand zum Messbereich der jeweiligen Messvorrichtung positioniert, damit gleiche Verhältnisse bei beiden Messungen vorliegen.

Ein erfindungsgemäßes Verfahren zur Ermittlung des Farbmesswertes eines Farbfeldes eines Druckbildes auf einer laufenden, zumindest teilweise transparenten Materialbahn, unter der ein Messhintergrund angeordnet ist, umfässt folgende Schritte:

Ermitteln des Farbwertes des Farbfeldes auf' einem verschmutzten Messhintergrund in einem ersten Schritt,
Ermitteln des Farbmesswertes des Materials der Materialbahn ohne Farbfeld auf sauberem Messhintergrund in einem zweiten Schritt,
Ermitteln des Farbwertes des Materials der Materialbahn auf verschmutztem Messhintergrund und Multiplizieren des Farbwertes aus dem ersten Schritt mit dem Koeffizienten aus dem Farbwert des zweiten Schrittes und dem Farbwert des dritten Schrittes
Auf diese Weise kann der Verschmutzungsgrad des Messhintergrunds in einem Farbmesswert des Farbfeldes auf der transparenten Materialbahn henausgerechnet bzw kompensiert werden.

Die Erfindung wird beispielsweise anhand der Zeichnung näher erläutert Es zeigen

Fig. 1    schematisch eine über einer bedruckten Materialbahn längs einer Führungsbahn verfahrbare Messeinheit,
Fig. 2    eine seitliche Verlängerung der Führungsbahn,
Fig. 3    ein in der Außenposition der Messeinheit an-

Fig 4      einen Probenaufnahmekörper,

Fig. 5      eine schematische Ansicht eines Handmessgerätes,

Fig. 6      eine abgewandelte Ausführungsform der in Fig 3 wiedergegebenen Vorrichtung,

Fig 7      schematisch eine Probenaufnahme mit Schieber, und

Fig 8      ein Probenstück einer Materialbahn mit einem aufgedruckten Farbfeld

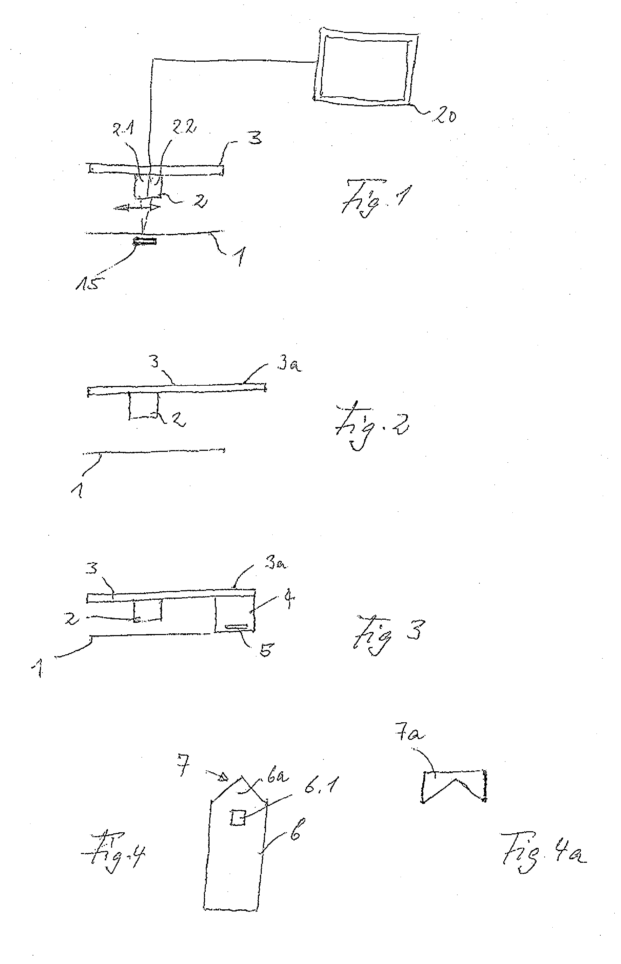

In den Figuren ist mit 1 eine senkrecht zur Zeichenebene laufende, fortlaufend mit sich wiederholenden Druckbildern versehene Materialbahn bezeichnet, über der eine Messeinheit 2 an einer Traverse bzw. Führungsbahn 3 quer über die Materialbahn 1 verfahrbar angeordnet ist Die Messeinheit 2 enthält vorzugsweise einen Farbmesskopf 2.1 mit einem Farbmesssensor und einer Beleuchtungseinrichtung, beispielsweise einem Stroboskop, und eine Kamera 2.2, beispielsweise eine CCD-Kamera. Während des Druckbetriebs werden durch die Messeinheit 2 die Farbmesswerte von Farbfeldern im Druckbild auf der Materialbahn 1 aufgenommen und auf einer Wiedergabeeimichtung, beispielsweise einem Bildschirm 20, wiedergegeben. Hierbei zeigt Fig. 1 eine Anordnung, bei der die Messeinheit 2 nur über die Breite der Materialbahn 1 verfahrbar ist bzw. die Führungsbahn 3 sich nicht über die Breitenabmessung des üblichen Messbereichs hinaus erstreckt

Bei 15 ist ein mit der Messeinheit 2 unter der Materialbahn 1 beweglicher Messhintergrund angedeutet, der bei transparenten Materialbahnen 1 einen vorgegebenen Hintergrund für das auf der Materialbahn aufgedruckte Farbbild bildet.

Fig. 2 zeigt eine Ausführungsform, bei der eine seitliche Verlängerung 3a der Führungsbahn 3 über den Messbereich über der Materialbahn 1 hinausragt, sodass die Messeinheit 2 in eine Außenposition außerhalb der Matezialbahn 1 verfahrbar ist

Fig. 3 zeigt ein in der Außenposition angeordnetes Gehäuse 4, in dem die Messeinheit 2 in einer Stellung oder in mehreren vorgegebenen Stellungen positioniert werdenkann.

Die in dem Gehäuse 4 geschützt angeordnete Messeinheit 2 kann in diesem Gehäuse 4 z.B. Messungen an einer in das Gehäuse eingeschobenen Farbprobe und/oder einer im Gehäuse angebrachten Farbprobe vornehmen.

Nach einer bevorzugten Ausführungsform ist das Gehäuse 4 mit einer Einschuböffnung 5 versehen, durch die ein Probenaufnahanekörper eingeschoben und in eine vorgegebene Stellung im Sichtbereich der Messeinheit 2 im Gehäuse 4 durch eine Halterung positioniert werden kann

Fig 4 zeigt ein Ausführungsbeispiel eines Probenaufnahmekörpers 6 in Form einer rechteckigen Platte, die in die Einschuböffnung 5 eingeschoben werdenkann. Mit 61 ist der Aufnahmebereich für eine Farbprobe bezeichnet. Am Vorderende ist bei dem wiedergegebenen Ausführungsbeispiel der Probenaufnahmekörper 6 mit einem Eingriffsabschnitt 7 versehen, der eine vorgegebene Form hat, bei dem dargestellten Ausführungsbeispiel eine Keilform. In dem Schutzgehäuse 4 der Messeinheit 2 ist eine in Fig. 4a schematisch wiedergegebene Passung 7a für den Eingriffsabschnitt 7 vorgesehen, durch die die Einschubposition des Probenaufnahmekörpers 6 im Gehäuse 4 festgelegt wird.

Die Einschuböffnung 5 ist am Gehäuse 4 so ausgebildet, dass der Probenaufnahmekörper 6 auf der Ebene der Materialbahn 1 unter der Messeinheit 2 positioniert wird, damit die Messeinheit 2 von der Farbprobe auf dem Probenaufnahmekörper 6 den gleichen Abstand einnimmt wie von der Materialbahn 1

In der Praxis der Farbmessung im Druckbereich ist ein Handmessgerät für die Farbmessung Standard, dessen Farbmessergebnisse als in der Praxis verbindlich angesehen werden. Es ist deshalb erwünscht, einen Vergleich der Farbmessergebnisse der über dem Druckbild auf einer Materialbahn 1 verfahrbaren Messeinheit 2 mit den Farbmessergebnissen des Handmessgeiätes vorzunehmen.

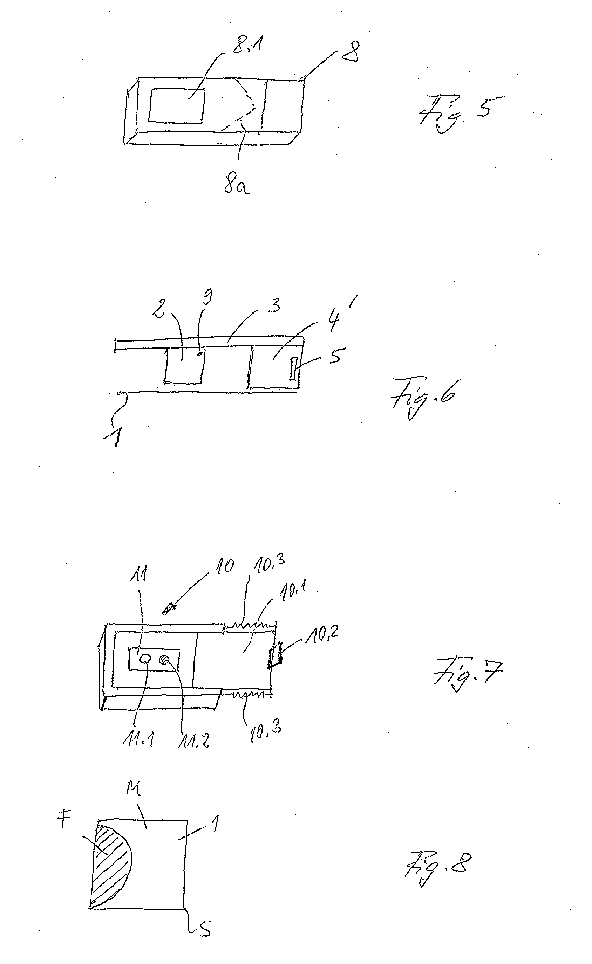

Fig. 5 zeigt schematisch ein Handmessgerät 8 mit einem Display 8.1 zur Wiedergabe eines Farbmessergebnisses. Das Handmessgerät 8 wird über einem Farbfeld eines Druckbildes positioniert, um eine Farbmessung vorzunehmen, wobei das Handmessgerät 8 mit seiner Unterseite auf dem Druckbild aufliegt

Erfindungsgemäß ist das Handmessgerät 8 auf der Unterseite bzw. auf der Seite der Messöffnung mit einem in Fig. 5 gestrichelt wiedergegebenen Aufnahmeabschnitt 8a versehen, der dem Aufnahmeabschnitt 7a bzw. der Passung im Gehäuse 4 entspricht, so dass der Probenaufhahmekörper 6 in der gleichen Weise wie im Gehäuse 4 auch am Handgerät 8 unter der Messöffnung des Handmessgerätes positioniert werden kann Dabei wird durch den Aufnahmeabschnitt 8a der Probenaufnahmekörper 6 mit dem gleichen Abstand von der Messöffnung positioniert, wie dies beim Auflegen des Handmessgerätes 8 zur Farbmessung auf einem Druckbild der Fall ist

Bei dem dargestellten Ausführungsbeispiel ist der Eingriffsabschnitt durch eine am Probenaufnahmekörper 6 vorgesehene keilförmige Nase 6a ausgebildet, die formschlüssig mit dem für die beiden Messvorrichtungen 2 und 8 vorgesehenen Aufnahmeabschnitt 7a bzw. 8a in Eingriff tritt. Die exakte Positionierung des Probenaufnahmekörpers 6 an den beiden Messvorrichtungen 2 und 8 kann auch durch eine andere Passvorrichtung vorgesehen werden, durch die der Probenaufnahmekörper 6 mit der Farbprobe in der Messposition angeordnet wird, wobei der Abstand von der Messöffnung in den beiden Messvorrichtungen 2 und 8 unterschiedlich sein kann

Auf diese Weise kann eine auf dem Probenaufnahmekörper 6 bei 6.1 angebrachte Farbprobe von beiden Messvorrichtungen 2 und 8 unter gleichen Bedingungen gemessen werden, sodass die von den beiden Messvorrichtungen 2 und 8 ermittelten Farbwerte ein und derselben Farbprobe ein vergleichbares bzw zuverlässiges Messergebnis liefern.

Gegebenenfalls kann durch eine Nachjustierung die eine Messvorrichtung z.B. 2 an die andere angeglichen werden, wenn die ermittelten Vergleichswerte unterschiedlich sind und aufeinander ausgerichtet werden sollen

Anstelle des Verfahrens der Messeinheit 2 aus dem Bereich der bedruckten Materialbahn 1 auf eine seitliche Verlängerung 3a der die Materialbahn überquerenden Führungsbahn 3 kann die Messeinheit 2 auf der Führungsbahn 3 auch verschwenkbar angebracht werden, sodass eine Verlängerung 3a der Führungsbahn 3 über den Breitenbereich der Materialbahn 1 hinaus nicht erforderlich ist. Durch Verschwenken der Messeinheit 2 auf der Führungsbahn 3 kann die Messeinhzeit 2 in dieser Außenposition auf einen anderen Messbereich ausgerichtet werden.

Auch bei einer verschwenkbaren Anordnung der Messeinheit 2 wird diese vorzugsweise durch ein Gehäuse 4' in der Schwenkstellung umgeben, durch das verhindert wird, dass zwischen der Optik des Farbmesskopfes und der der Kamera sowie dem zu messenden Substrat durch Unachtsamkeit eine Störung eingebracht werden kann. Das Gehäuse dient einerseits als Schutzvorrichtung gegenüber einer Beeinträchtigung der Messeinheit 2 durch äußere Einflüsse und andererseits zur Führung des Probenauffahhmekörpers 6 und dessen Positionierung relativ zur Messeinheit 2

Fig. 6 zeigt schematisch ein über der Materialbahn angeordnetes Schutzgehäuse 4', das auf der Führungsbahn 3 im Bereich der Breite der Materialbahn 1 angeordnet ist, wobei die in das Gehäuse 4' verfahrbare oder in dem Gehäuse angeordnete Messeinheit 2 in dem Gehäuse 4' oder mit dem Gehäuse 4' um z.B. 90° kippbar ist, so dass die Messausrichtung der Messeinheit 2 etwa parallel zur Führungsbahn 3 nach rechts in Fig. 6 verläuft. Es ist auch ein Kippen der Messeinheit 2 um 180° möglich, so dass die Messeinheit auf einen Messbereich über der Materialbahn 1 gerichtet ist

In Fig. 6 ist die Kippvorrichtung schematisch durch eine Schwenkachse 9 angedeutet, um die die Messeinheit 2 in dem Gehäuse 4' verschwenkbar bzw kippbar ist. In entsprechender Weise ist bei diesem Ausführungsbeispiel die Einschuböffnung 5 für den Probenaufhahmekörper 6 seitlich am Gehäuse 4' in einer Stellung angeordnet, in der der Probenaufnahmekörper 6 etwa senkrecht zur Materialbahn 1 liegt.

Auch bei dieser Ausgestaltung nach Fig 6 wird der Probenaufnahmekörper 6 durch das Gehäuse 4' bzw die in dem Gehäuse 4 angeordnete Führung für den Probenaufnahmekörper 6 in einem Abstand von der Messeinheit 2 gehalten, der dem Abstand der Messeinheit 2 über der Materialbahn 1 entspricht

Dadurch, dass die für die Farbmessung einer laufenden, mit Druckbildern bedruckten Materialbahn 1 vorgesehene Messeinheit 2 aus dem Messbereich über der bedruckten Materialbahn in eine Außenposition bewegbar ist, kann die Messeinheit 2 wie ein Handgerät zum Messen von stationären Farbproben verwendet werden, wobei das die Messeinheit 2 umgebende Gehäuse 4 oder eine anstelle des Gehäuses 4 vorgesehene entsprechende Führungseinrichtung bzw. Halterung den Probenaufnahmekörper 6 in dem vorgegebenen Abstand von der Messeinheit 2 hält

Es ist auch möglich, einen Probenaufnahmekörper in der Außenposition der Messeinheit 2 an dieser direkt anzubringen, wobei eine Aufnahmeeinrichtung für den Probenaufnahmekörper diesen in dem vorgegebenen Abstand an der Messeinheit 2 hält, der durch den Messabstand von der Materialbahn 1 vorgegeben ist. Eine solche an der Messeinheit 2 selbst anbringbare Halterung für den Probenaufnahmekörper oder eine Farbmessprobe kann im Gehäuse oder auch anstelle eines Gehäuses 4 vorgesehen werden.

Wenn bei der Farbmessung an einer laufenden Materialbahn 1 ein bei 15 in Fig 1 schematisch dargestellter Messhintergrund unter einer transparenten Materialbahn 1 für die Farbmessung verwendet wird, der mit der Messeinheit 2 quer zur Materialbahn 1 unter dieser beweglich ist, so wird dieser bewegliche Messhintergrund 15 vorzugsweise auch in das Gehäuse 4 der Messeinheit 2 in die Außenposition in Fig. 3 bewegt, so dass auch bei einer Farbmessung in der Außenposition die gleichen Messbedingungen vorliegen wie bei einer Farbmessung an der bedruckten Materialbahn.

Wenn unter der Materialbahn 1 ein durchgehender Messhintergrund vorgesehen ist, erstreckt sich dieser vorzugsweise auch in die Außenposition der Messeinheit 2 im Gehäuse 4, damit in der Außenposition Farbmessungen am gleichen Messhintergrund vorgenommen werden können

Die Messeinheit 2 kann im Gehäuse 4 verschiedene Positionen einnehmen, um unterschiedliche Messungen auszuführen Es ist aber auch möglich, in einer Stellung der Messeinheit im Gehäuse oder in zwei unterschiedlichen Stellungen unterschiedliche Proben in das Gehäuse einzuführen, um verschiedene Messungen auszuführen,

Nach einer Ausgestaltung kann die Messeinheit 2 im Gehäuse 4 beispielsweise eine Position A zum Kalibrieren, eine Position B zum Messen eines sauberen, nicht verschmutzten Messhintergrunds und eine Position C einnehmen zum Messen des verschmutzten Messhintergrunds 15 (Fig, 1).

Anstelle dieser drei unterschiedlichen Positionen der Messeinheit 2 im Gehäuse 4 kann in nur einer Position der Messeinheit 2 eine Probe zum Kalibriezen in das Gehäuse eingeschoben oder eingebracht werden und anhand eines weiteren Probenträgers ein sauberer Messhinteigrund in das Gehäuse eingeführt werden Der verschmutzte Messhintergrund 15, der in der Anlage für die laufenden Fazbmessungen verwendet wird, wird vorzugsweise in das Gehäuse 4 der Messeinheit 2 mit dieser hineinbewegt, um einen Farbmesswert für den verschmutzten Messhintergrund 15 zu erhalten.

Zum Kalibrieren der Messeinheit 2 wird in der Außenposition bzw im oder am Gehäuse 4 eine vorzugsweise fest angeordnete Probeaufnahme 10 vorgesehen, in die eine Referenzprobe 11 eingesetzt werden kann. Fig. 7 zeigt ein Ausführungsbeispiel einer solchen Probenaufnahme 10 mit einem Schieber 10.1, der die Refezenzprobe 11 abdeckt, wenn sich die Messeinheit außerhalb des Gehäuses 4 befindet und der z.B. durch die Messeinheit 2 dadurch in die Offenstellung bewegt werden kann, dass die Messeinheit 2 an einem Anschlag 10.2 an dem Schieber 10.1 zum Anliegen kommt und diesen in die Offenstellung verschiebt Vorzugsweise ist der Schieber 10.1 durch Federn 10.3 beaufschlagt, so dass sich der Schieber 10.1 selbsttätig in die Abdeckstellung über der Referenzprobe 11 verschiebt, sobald die Messeinheit 2 wieder in eine Messposition über der Materialbahn 1 verfahren wird.

Bei dem in Fig. 7 dargestellten Ausführungsbeispiel ist die Referenzprobe 11 zum Kalibrieren der Messeinheit 2 mit einer weißen Referenzprobe 11.1 und einer beispielsweise als runde Fläche ausgebildeten dunkleren Referenzprobe 11.2 versehen Je nach Kalibrierzungsvorgang können unterschiedliche Proben auswechselbar in der Probenaufnahme 10 vorgesehen werden

Insbesondere werden im Gehäuse 4 bzw in der Außenposition der Messeinheit 2 Messungen an verschiedenen Proben durchgeführt, wodurch es möglich ist, den während des laufenden Betriebs verschmutzten Messhintergrund 15 bei der Farbmessung zu kompensieren

Der mit der Messeinheit 2 über die Breite der Materialbahn 1 unter dieser verfahrbare Messhintergrund 15 (Fig. 1) beispielsweise in Form einer Platte, die zum Messen durch Druck oder Unterdruck kurzzeitig an der Materialbahn 1 zum Anliegen gebracht wird, verschmutzt unvermeidlich während des Betriebs der Anlage, wodurch sich bei einer z B transparenten Folie als Materialbahn 1 die Farbmessung verändert, weil der Hintergrund 15 sich verändert, dessen beispielsweise Grautönung durch das Material der Materialbahn 1 hindurch für die Farbmesseinheit 2 sichtbar ist und dadurch die Farbmessung eines Farbfeldes auf der Materialbahn 1 beeinflusst

Um bei der Farbmessung den Verschmutzungsgrad des Messhinteigrunds 15 zu kompensieren, können im Gehäuse 4 bzw. in der Außenposition der Messeinheit 2 verschiedene Messungen ausgeführt wezden.

Fig. 8 zeigt zur Veranschaulichung der vorzunehmenden Farbmessungen ein Probenstück S der Materialbahn 1, die beispielweise aus einer transparenten oder teilweise transparaten Folie bestehen kann. Auf dem transparenten Material M der Materialbahn ist als Beispiel ein Farbfeld F aufgedruckt, wobei im Betrieb der Farbmessung an der laufenden Materialbahn z.B. der Farbwert dieses auch im Druckbild auf der Materialbahn 1 vorhandenen Farbfeldes F gemessen wird. Mit anderen Worten stellt die Probe in Fig 8 ein Probenstück S der wähnend des laufenden Betriebs gemessenen Materialbahn 1 dar

Nach einem Ausführungsbeispiel kann der verschmutzte Messhintergrund 15 (Fig. 1) gemessen werden, der in das Gehäuse 4 hineinbewegt wird, ohne dass sich die Materialbahn 1 über dem Messhintergrund 15 befindet

Weiterhin kann ein sauberer Messhintergrund dadurch gemessen werden, dass in das Gehäuse 4 die Messprobe eines sauberen Messhintergrunds eingeführt oder in diesem vorpositioniert wird

In diesen beiden Fällen kann die Messung mit Materialbahn über dem Messhintergrund vorgenommen werden, indem in das Gehäuse 4 ein der jeweiligen Materialbahn 1 entsprechendes, separates Flächenstück S (Fig. 8) in das Gehäuse 4 als Messprobe eingeführt wird.

Um den Farbmesswert $\beta 1$ eines auf einer Materialbahn 1, z.B. einer teilweise transparenten Folie, aufgedruckten Farbfeldes bzw. eines Messbereichs F zu ermitteln, der dem einer Messung auf einem sauberen Messhintergrund 15 entspricht, wird erfindungsgemäß zunächst der Farbmesswert ß2 des Messbereichs bzw, Farbfeldes F auf dem verschmutzten Messhintergrund 15 ezmittelt.

Weiterhin wird der Farbmesswert ß3 der Materialbahn M ohne Aufdruck, in diesem Beispiel also der Folie ohne Farbfeld F, auf dem sauberen Messhintergrund einer Probe durch die Messeinheit 2 im Gehäuse 4 gemessen Schließlich wird der Farbmesswert ß4 der Materialbahn M ohne Farbfeld auf' dem verschmutzten Messhintergrund 15 ermittelt

Hierauf wird der Farbmesswert ß2 des Farbfeldes F auf dem verschmutzten Hintergrund 15 mit dem Quotienten aus dem Farbmesswert ß3 des unbedruckten Materials M auf sauberem Messhintergrund und dem Farbmesswert ß4 des Materials M ohne Aufdruck auf verschmutztem Hintergrund 15 multipliziert nach der Formel

$$\beta 1_F^s = \beta 2_F^v \times \frac{\beta 3_M^s}{\beta 4_M^v}$$

wobei

s = sauberer Messhintergrund
v = verschmutzter Messhintergrund
F = Farbfeld auf Materialbahn 1, und

M = Materialbahn 1 ohne Farbfeld F bzw ohne Aufdruck.

Auf diese Weise können in der Außenposition der Messeinheit 2 anhand verschiedener Proben Farbmessungen durchgeführt werden, aus deren Ergebnissen der Verschmutzungsgrad des Messhintergrunds 15 in einem Farbmesswert des Farbfeldes F herausgerechnet bzw kompensiert werden kann.

Von Vorteil dabei ist, wenn bei den Farbmesswerten ß2, ß3 und ß4, die aus dem ersten, zweiten bzw. dritten Schritt abgeleitet sind, sowohl die internen als auch die externen Reflexionsfaktoren individuell berücksichtigt werden.

Erfindungsgemäß wird ein Verfahren zur Anpassung von Farbmesswerten eines Farbfeldes bzw. Messbereichs F eines Druckbildes auf einer laufenden Materialbahn 1 vorgesehen, unter der ein Messhintergrund 15 angeordnet ist, bezüglich eines sich farblich von einem Zielmesshintergrund unterscheidenden (bspw. durch Alterung bzw. Verschmutzung) Messhintetgrunds, umfassend die Schritte:

- Ermitteln der Farbmesswerte ß2 des Messbereichs F auf einem vom Zielmesshintergrund farblich abweichenden Messhintergrund 15 in einem ersten Schritt,

- Ermitteln der Farbmesswerte ß3 des Materials M der Materialbahn 1 ohne Farbfeld F bezüglich des Zielmesshinteigrunds in einem zweiten Schritt,

- Ermitteln der Farbmessweite ß4 des Materials M der Materialbahn 1 auf vom Zielmesshintergrund farblich abweichenden Messhintergrund 15,

- wobei Farbwerte ß5, ß6 und ß7 aus den Farbmesswerten ß2, ß3 und ß4 aus dem ersten, zweiten bzw. dritten Schritt abgeleitet werden, indem sie dahin gehend angepasst werden, dass sowohl die internen als auch die externen Reflexionsfaktoren individuell berücksichtigt werden

- Der abschließende Schritt der Anpassung ist das Multiplizieren der Farbwerte ß5 mit dem Quotienten aus den Farbwerten ß6 und den Farbwerten ß7.

Dieses Verfahren zur Anpassung von Farbwerten des Farbfeldes bzw. Messbereichs F eines Druckbildes auf einer laufenden, wenigstens teilweise transparenten Materialbahn kann nicht nur in Verbindung mit der beschriebenen Außenposition der Messeinheit verwendet werden, sondern auch durch Auswechseln des Messhintergrunds unter einer Materialbahn, ohne dass die Messeinheit in eine Außenposition bewegt wird.

Auch ist dieses Verfahren nicht auf eine über der Materialbahn verfahrbare Messeinheit beschränkt, vielmehr kann das Verfahren auch in einer mobilen Farbmesseinheit angewendet werden.

**Patentansprüche**

1. Vorrichtung zur Farbmessung eines Farbfeldes bzw. eines Messbereichs (F) eines auf einer laufenden Materialbahn aufgedruckten Druckbildes, umfassend eine Messeinheit (2), die auf einer Führungsbabn (3) quer über der laufenden Materialbahn (1) verfahrbar ist, wobei
eine Einrichtung vorgesehen ist, mittels der die Messeinheit (2) aus dem Messbereich über der Materialbahn in eine Außenposition bewegbar ist, in der die Messeinheit (2) auf einen Messbereich (6; 11) außerhalb der Materialbahn (1) gerichtet ist.

2. Vorrichtung nach Anspruch 1, wobei die Einrichtung zum Bewegen der Messeinheit (2) in die Außenposition als seitliche Verlängerung (3a) der Führungsbahn (3) ausgebildet ist.

3. Vorrichtung nach Anspruch 1, wobei die Einrichtung zum Bewegen der Messeinheit (2) in die Außenposition durch eine Kippvorrichtung (9) ausgebildet ist, durch die die Messeinheit auf der Führungsbahn (3) in eine Außenposition verschwenkbar ist.

4. Vorrichtung nach einem der Ansprüche 1 bis 3, wobei die Messeinheit (2) zumindest in der Außenposition von einer Führung und/oder einem Gehäuse (4) umgeben ist, das eine Halterung für einen Probenaufhahmekörper (6) aufweist

5. Vorrichtung nach Anspruch 4, wobei der Probenaufhahmekörper (6) mit einem Eingriffsabschnitt (7) versehen ist, der formschlüssig mit einem entsprechenden Aufnahmeabschnitt (8a) an einem Handmessgerät (8) und einem Aufnahmeabschnitt (7a) an der Halterung in Eingriff bringbar ist.

6. Verfahren für die Farbmessung eines Farbfeldes eines auf einer laufenden Materialbahn aufgedruckten Druckbildes, umfassend eine Messeinheit (2), die längs einer Führungsbahn (3) quer über der Materialbahn (1) verfahrbar ist,
**dadurch gekennzeichnet,**
**dass** die Messeinheit (2) in eine Außenposition bewegt wird, in der die Messeinheit (2) auf' einen anderen Messbereich als einen Messbereich auf der Materialbahn ausgerichtet ist,
wobei in der Außenposition der Messeinheit (2) eine Farbmessung an einer Farbprobe ausgeführt wird und das Ergebnis der Farbmessung beispielsweise als Vergleichswert verwendet wird.

7. Verfahren nach Anspruch 6, wobei das Ergebnis der Farbmessung an einer Farbprobe in der Außenposition der Messeinheit (2) mit dem Ergebnis der Farbmessung der gleichen Probe durch ein Handgerät (8) verglichen wird

8.  Verfahren nach Anspruch 7, wobei ein Probenaufnahmekörper (6) verwendet wird, der durch eine Passeinrichtung (7a, 8a) in eine vorgegebene Ausrichtung bzw. im vorgegebenen Abstand zum Messbereich der jeweiligen Messvorrichtung positioniert wird

9.  Verfahren zur Ermittlung des Farbmesswertes eines Farbfeldes (F) eines Druckbildes auf einer laufenden Materialbahn (1), unter der ein Messhintergrund (15) angeordnet ist, umfassend die Schritte:

    - Ermitteln des Farbmessweites (ß2) des Farbfeldes (F) auf einem verschmutzten Messhintergrund (15) in einem ersten Schritt,
    - Ermitteln des Farbmesswertes (ß3) des Materials (M) der Materialbahn (1) ohne Farbfeld (F) auf sauberen Messhintergrund in einem zweiten Schritt,
    - Ermitteln des Farbmessweites (ß4) des Materials (M) der Materialbahn (1) auf verschmutztem Messhintergrund (15), und
    - Multiplizieren des Farbmesswertes (ß2) aus dem ersten Schritt mit dem Quotienten aus dem Farbmesswert (ß3) des zweiten Schrittes und dem Farbmesswert (ß4) des dritten Schrittes.

20

2.1  2.2

3

2

*Fig. 1*

15

1

3

3a

2

*Fig. 2*

1

3

3a

2

4

6

5

*Fig 3*

1

7a

7

6a

6.1

6

*Fig. 4*

*Fig. 4a*

Fig. 5

Fig. 6

Fig. 7

Fig. 8